# EUROPÄISCHE PATENTSCHRIFT

(11) **EP 2 641 057 B1**
(45) Veröffentlichungstag und Bekanntmachung des Hinweises auf die Patenterteilung: **15.03.2017**
(21) Anmeldenummer: 11784511.5
(22) Anmeldetag: 18.11.2011
(51) Int. Cl.: G01C 21/36

(54) **VERFAHREN ZUR AUSGABE VON NAVIGATIONSHINWEISEN**
PROCEDURE FOR DISPLAYING NAVIGATION INSTRUCTIONS
PROCÉDÉ D'AFFICHAGE D'INSTRUCTIONS DE NAVIGATION

(30) Priorität: 19.11.2010 DE 102010052000
(43) Veröffentlichungstag der Anmeldung: 25.09.2013
(73) Patentinhaber: Bayerische Motoren Werke Aktiengesellschaft, 80809 München (DE)
(72) Erfinder: BREISINGER, Marc, San Francisco 941170000 (US); SCHUMANN, Josef, 80995 Muenchen (DE); MARIET, Robertus, NL-5046 Tilburg (NL)
(74) Vertreter: Kammermeier, Peter Frank
(86) Internationale Anmeldenummer: PCT/EP2011/070476
(87) Internationale Veröffentlichungsnummer: WO 2012/066131

(56) Entgegenhaltungen:
- EP-A1- 1 942 314
- EP-A2- 2 078 927
- DE-A1- 10 039 687
- DE-A1-102004 060 380
- LIND R ET AL: "THE NETWORK VEHICLE - A GLIMPSE INTO THE FUTURE OF MOBILE MULTI-MEDIA", IEEE AEROSPACE AND ELECTRONIC SYSTEMS MAGAZINE, IEEE SERVICE CENTER, PISCATAWAY, NJ, US, Bd. 14, Nr. 9, 1. September 1999 (1999-09-01), Seiten 27-32, XP000941847, ISSN: 0885-8985, DOI: 10.1109/62.793450

## Beschreibung

Die Erfindung betrifft ein Verfahren zur Ausgabe von Navigationshinweisen in einem Kraftfahrzeug, welches über ein Navigationssystem und ein zur Ausgabe grafischer Navigationshinweise geeignetes Head-Up Display verfügt.

Aus dem Stand der Technik ist es bekannt, Navigationshinweise in mehreren, grafisch unterschiedlich ausgestalteten Stufen auszugeben. Aus dem Stand der Technik ist es ferner bekannt, Fahrspurinformationen auszugeben. Je nach Ausführungsform sind manche der bekannten Darstellungsarten für den jeweiligen Bediener jedoch noch schwer intuitiv zu verstehen.

Head-Up Displays, durch welche grafische Information über die Windschutzscheibe ins Sichtfeld des Fahrers eingespiegelt werden kann, sind in modernen Kraftfahrzeugen mittlerweile zunehmend verfügbar.

Die DE 10 2004 060380 A1 offenbart ein Head-Up-Display mit je nach Abstand zu einem Aktionspunkt verschieden detaillierten Navigationshinweisen sowie spurgenauer Darstellung mit grafischen Linienobjekten.

Es ist eine Aufgabe der Erfindung, ein einfaches Verfahren zur Ausgabe von leicht verständlichen Navigationshinweisen an den Fahrer eines Kraftfahrzeugs anzugeben.

Gelöst wird diese Aufgabe durch ein Verfahren gemäß Anspruch 1. Vorteilhafte Ausführungsformen und Weiterbildungen der Erfindung ergeben sich aus den abhängigen Ansprüchen.

Bei dem erfindungsgemäßen Verfahren werden grafische Navigationshinweise in zumindest drei - sich wesentlich hinsichtlich der grafischen Detaillierung des jeweiligen Navigationshinweises unterscheidenden - Hinweiskategorien ausgegeben. Welche Hinweiskategorie zur Ausgabe eines auszugebenden Navigationshinweises gewählt wird, hängt zumindest ab von der Entfernung des Kraftfahrzeugs zu einem Aktionspunkt des durch den Navigationshinweis angekündigten Navigationsmanövers, gegebenenfalls zudem vom befahrenen Straßentyp. Beispielsweise kann für Landstraßen bei Verwendung von drei Kategorien gelten: Hinweiskategorie 1 auf den letzten 400 Metern vor dem Aktionspunkt des angekündigten Abbiegemanövers; Hinweiskategorie 2 bei Entfernungen zum Aktionspunkt zwischen 2000 Metern und 400 Metern; Hinweiskategorie 3 bei Entfernungen zum Aktionspunkt von mehr als 2000 Metern.

Navigationshinweise derjenigen Hinweiskategorie (im Folgenden als erste Hinweiskategorie bezeichnet), die für kleine Entfernungen gewählt wird (im obigen Beispiel auf Landstraßen also unter 400 Metern Entfernung zum Aktionspunkt), umfassen eine perspektivische spurgenaue Darstellung eines für das Navigationsmanöver relevanten Kartenausschnitts im Head-Up Display. Darin wird erfindungsgemäß eine erste von dem Navigationssystem vorgeschlagene Fahrlinie durch ein erstes grafisches Linienobjekt (d.h. in Gestalt eines ersten grafischen Linienobjekts) spurgenau in den Kartenausschnitt eingezeichnet. Zudem wird eine zweite von dem Navigationssystem als Alternative vorgeschlagene Fahrlinie durch ein zweites grafisches Linienobjekt, welches sich zumindest bezüglich seiner grafischen Objektfüllung von dem ersten Linienobjekt unterscheidet, spurgenau in den Kartenausschnitt eingezeichnet. Der Aktionspunkt wird grafisch in dem Kartenausschnitt markiert durch eine entlang dem ersten Linienobjekt angeordnete Aktionspunktmarkierung. Die aktuelle Entfernung des Kraftfahrzeugs vom Aktionspunkt wird - schritthaltend mit Positionsveränderungen des Kraftfahrzeugs - grafisch in dem Kartenausschnitt markiert durch eine entlang dem ersten Linienobjekt angeordnete Entfernungsmarkierung.

Die grafischen Navigationshinweise der ersten Hinweiskategorie vermitteln dem Fahrer somit auf einfache und ablenkungsarme Art und Weise ein deutlich gegenüber dem Stand der Technik verbessertes, leicht interpretierbares Informationsspektrum.

Die Entfernungsmarkierung zur Markierung der aktuellen Entfernung des Kraftfahrzeugs vom Aktionspunkt kann besonders vorteilhaft dadurch erzeugt werden, dass das erste Linienobjekt unterhalb der Aktionspunktmarkierung einen im Wesentlichen an die Aktionspunktmarkierung angrenzenden ersten Bereich mit einer ersten grafischen Objektfüllung aufweist, dass es ferner einen an diesen ersten Bereich angrenzenden, sich bis zum unteren Ende des Linienobjekts erstreckenden zweiten Bereich mit einer zweiten grafischen Objektfüllung aufweist und dass die Grenze zwischen dem ersten Bereich und dem zweiten Bereich mit abnehmender Entfernung in Richtung der Aktionspunktmarkierung verschoben wird. In anderen Worten, die Entfernungsmarkierung zur Markierung der aktuellen Entfernung des Kraftfahrzeugs vom Aktionspunkt besteht darin, dass an der Stelle des ersten Linienobjekts, die der aktuellen Position des Kraftfahrzeugs entspricht, von einer ersten grafischen Objektfüllung des ersten Linienobjekts zu einer zweiten grafischen Objektfüllung des ersten Linienobjekts übergegangen wird. Auf diese Weise wird eine Darstellungsform, die aus dem Stand der Technik bekannt ist als separater sich mit abnehmender Entfernung "auffressender" Entfernungsbalken, elegant abgewandelt und in die Gesamtdarstellung auf Basis der perspektivischen Straßenkarte übernommen.

Gemäß einer bevorzugten Ausführungsform der vorliegenden Erfindung enthalten bereits Navigationshinweise einer zweiten Hinweiskategorie, die für mittlere Entfernungen gewählt wird, Fahrspurinformationen. Diese werden visualisiert durch eine grafische Darstellung der an der aktuellen Position des Kraftfahrzeugs in dessen aktueller Fahrtrichtung verfügbaren Fahrspuren. Diese grafische Darstellung ist in extremem Querformat gehalten, im Wesentlichen also als horizontaler Streifen ausgebildet, und ist am unteren Rand der Anzeigefläche des Head-Up Display angeordnet. Das Querformat und die Anordnung am unteren Rand sorgen dafür, dass der Fahrer durch diese Darstellung noch nicht stark vom Verkehrsgeschehen abgelenkt wird. Dennoch kann er bereits Fahrspuranweisungen entnehmen und befolgen. Der Aktionspunkt ist in bei Navigationshinweisen der zweiten Hinweiskategorie noch verhältnismäßig weit entfernt, weshalb die grafische Darstellung der Fahrspuren in der zweiten Hinweiskategorie noch vor dem Aktionspunkt endet.

Gemäß einer auf dieser Ausführungsform aufsetzenden besonders bevorzugten Ausführungsform der vorliegenden Erfindung wird die grafische Darstellung der Fahrspuren aus der zweiten Hinweiskategorie als Teil des Kartenausschnitts in die erste Hinweiskategorie (die für kleine Entfernungen gewählt wird) übernommen, wenn aufgrund einer Verkürzung der Entfernung des Kraftfahrzeugs zum Aktionspunkt von der zweiten Hinweiskategorie zur ersten Hinweiskategorie übergegangen wird. Hält sich der Blick des Fahrers also während der Darstellung des Navigationshinweises der zweiten Hinweiskategorie an dem querformatig dargestellten Fahrspurinformationsstreifen fest, so kann er sich beim Übergang zur Darstellung des Navigationshinweises der ersten Hinweiskategorie weiterhin daran festhalten, denn der Fahrspurinformationsstreifen wird dorthin übernommen. Der in der zweiten Hinweiskategorie sichtbare Fahrspurinformationsstreifen ist hierzu selbstverständlich grafisch bereits geeignet auszuführen. Er muss dazu insbesondere eine geeignete Größe besitzen und eine geeignete perspektivische Darstellung der Fahrspuren geben.

In anderen Worten muss der Navigationshinweis der zweiten Hinweiskategorie bereits einen - querformatigen und auf einen Bereich im Vorfeld des Aktionspunkts beschränkten - Ausschnitt des anschließend im Rahmen des Navigationshinweises der ersten Hinweiskategorie perspektivisch darzustellenden Kartenausschnitts enthalten.

In abermals anderen Worten "entwickelt" sich der im Rahmen des Navigationshinweises der ersten Hinweiskategorie dargestellte Kartenausschnitt grafisch aus dem zuvor im Rahmen des Navigationshinweises der zweiten Hinweiskategorie dargestellten Fahrspurinformationsstreifen.

Die oben genannte besonders bevorzugte Ausführungsform der vorliegenden Erfindung kann weiter vorteilhaft ausgestaltet werden, indem die Fahrspurinformationen der zweiten Hinweiskategorie Fahrspuranzeigeobjekte enthalten, die bereits vorteilhaft auf die Darstellung der ersten Hinweiskategorie abgestimmt sind. Insbesondere kann die grafische Darstellung der Fahrstreifen in der zweiten Hinweiskategorie grafisch angereichert sein durch ein erstes Fahrspuranzeigeobjekt, welches diejenige Fahrspur kennzeichnet, auf welcher die erste von dem Navigationssystem vorgeschlagene Fahrlinie verläuft, sowie durch ein zweites Fahrspuranzeigeobjekt, welches diejenige Fahrspur kennzeichnet, auf welcher die zweite von dem Navigationssystem vorgeschlagene Fahrlinie verläuft, wobei sich das zweite Fahrspuranzeigeobjekt zumindest bezüglich seiner grafischen Objektfüllung von dem ersten Fahrspuranzeigeobjekt unterscheidet. Das erste Fahrspuranzeigeobjekt kann dann durch das erste Linienobjekt ersetzt werden, wenn aufgrund einer Verkürzung der Entfernung des Kraftfahrzeugs zum Aktionspunkt von der zweiten Hinweiskategorie zur ersten Hinweiskategorie übergegangen wird, und das zweite Fahrspuranzeigeobjekt kann durch das zweite Linienobjekt ersetzt werden, wenn aufgrund einer Verkürzung der Entfernung des Kraftfahrzeugs zum Aktionspunkt von der zweiten Hinweiskategorie zur ersten Hinweiskategorie übergegangen wird.

Eine besonders anschauliche grafische "Entwicklung" des im Rahmen des Navigationshinweises der ersten Hinweiskategorie dargestellten Kartenausschnitt aus dem zuvor im Rahmen des Navigationshinweises der zweiten Hinweiskategorie dargestellten Fahrspurinformationsstreifen wird erreicht, indem die grafische Objektfüllung des ersten Linienobjekts im Wesentlichen derjenigen des ersten Fahrspuranzeigeobjekts entspricht und indem die grafische Objektfüllung des zweiten Linienobjekts im Wesentlichen derjenigen des zweiten Fahrspuranzeigeobjekts entspricht. Der den Übergang beobachtende Fahrer wird einander entsprechende Informationen dann problemlos zuordnen können.

Gemäß einer bevorzugten Ausführungsform der vorliegenden Erfindung enthalten Navigationshinweise einer dritten Hinweiskategorie, die für große Entfernungen gewählt wird, keine Fahrspurinformationen. Besonders vorteilhaft erscheint es, solche Navigationshinweise auch gar nicht über das Head-Up Display auszugeben, sondern über eine zweite zur Ausgabe grafischer Navigationshinweise geeignete Anzeigeeinheit. Insbesondere können solche Navigationshinweise der dritten Hinweiskategorie im Instrumentenkombi des Kraftfahrzeugs ausgegeben werden.

Bei der Beschreibung der vorliegenden Erfindung wird davon ausgegangen, dass fahrspurgenaue Kartendaten vorliegen und dass somit von dem Navigationssystem fahrspurgenaue Fahrlinien berechnet und empfohlen werden können sowie dass fahrspurgenaue Navigationshinweise ausgegeben werden können. Es wird bei der vorliegenden Beschreibung jedoch nicht davon ausgegangen, dass die Position des Kraftfahrzeugs fahrspurgenau bekannt ist. Es wird somit bei der vorliegenden Beschreibung davon ausgegangen, dass die erste und die zweite von dem Navigationssystem vorgeschlagene Fahrlinie unabhängig von der aktuell befahrenen Fahrspur berechnet werden. Die Erfindung ist jedoch gleichermaßen anwendbar auf den Fall, dass die aktuell befahrene Fahrspur des Kraftfahrzeugs bekannt ist und dass die erste und zweite Fahrlinie auf dieser Basis berechnet werden.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch
- Fig. 1a: eine grafische Ausgabe eines Head-Up Displays eines Kraftfahrzeug bei großer Entfernung (5000 Meter) vom Aktionspunkt eines Abbiegemanövers,
- Fig. 1b: eine gleichzeitige grafische Ausgabe im Instrumentenkombi des Kraftfahrzeugs,
- Fig. 2a: eine grafische Ausgabe des Head-Up Displays bei mittlerer Entfernung (700 Meter) vom Aktionspunkt,
- Fig. 2b: eine gleichzeitige grafische Ausgabe im Instrumentenkombi des Kraftfahrzeugs,
- Fig. 3a: eine grafische Ausgabe des Head-Up Displays bei kurzer Entfernung (400 Meter) vom Aktionspunkt,
- Fig. 3b: eine gleichzeitige grafische Ausgabe im Instrumentenkombi des Kraftfahrzeugs,
- Fig. 4a: eine grafische Ausgabe des Head-Up Displays bei noch kürzerer Entfernung (100 Meter) vom Aktionspunkt,
- Fig. 4b: eine gleichzeitige grafische Ausgabe im Instrumentenkombi des Kraftfahrzeugs.

Ausgegangen wird von einem Kraftfahrzeug mit Navigationssystem und einem zur Ausgabe grafischer Navigationshinweise geeigneten Head-Up Display. Auch im Instrumentenkombi des Kraftfahrzeugs sind grafische Navigationshinweise ausgebbar. Die Navigationshinweise werden in drei sich wesentlich hinsichtlich der grafischen Detaillierung des jeweiligen Navigationshinweises unterscheidenden Hinweiskategorien ausgegeben. Die Hinweiskategorie zur Ausgabe eines auszugebenden Navigationshinweises hängt vorliegend ab von der Entfernung des Kraftfahrzeugs zum Aktionspunkt des jeweiligen Navigations- bzw. Abbiegemanövers und vom Straßentyp. Die Abhängigkeit vom Straßentyp besteht darin, dass die Entfernungsintervalle je nach Straßentyp unterschiedlich festgelegt sind, beispielsweise für Landstraßen folgendermaßen: Hinweiskategorie 1 auf den letzten 400 Metern; Hinweiskategorie 2 bei Entfernungen zwischen 2000 Metern und 400 Metern; Hinweiskategorie 3 bei Entfernungen von mehr als 2000 Metern.

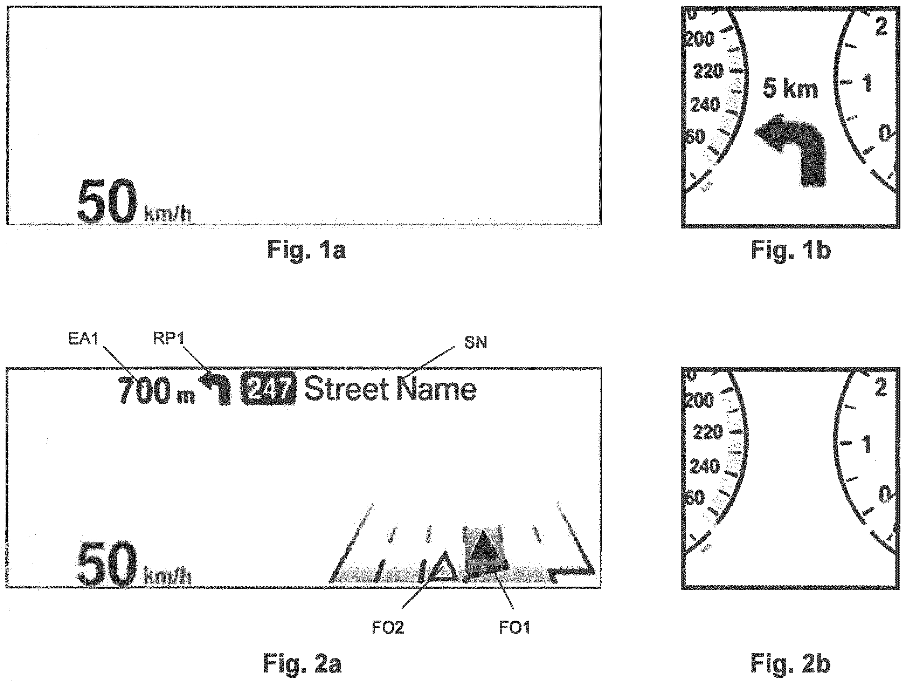

Die Figurenpaare Fig. 1a und Fig. 1b bzw. Fig. 2a und Fig. 2b bzw. Fig. 3a und Fig. 3b bzw. Fig. 4a und Fig. 4b geben jeweils ein Anzeigebeispiel für gleichzeitige Anzeigen auf dem Head-Up Display und im Instrumentenkombi des Kraftfahrzeugs.

Fig. 1a und Fig. 1b geben ein Anzeigebeispiel für den Fall, dass das Kraftfahrzeug vom nächsten Abbiegemanöver noch verhältnismäßig weit entfernt ist, hier 5000 Meter. Entsprechend den oben angegebenen Entfernungsintervallen wird in diesem Fall ein Navigationshinweis der dritten Hinweiskategorie ausgegeben.

Navigationshinweise der dritten Hinweiskategorie werden im vorliegenden Beispielfall ausschließlich im Instrumentenkombi (vgl. Fig. 1 b) ausgegeben. Im Head-Up Display (vgl. Fig. 1 a) wird keine - über die stets vorhandene Geschwindigkeitsanzeige hinausgehende - Information angezeigt, insbesondere kein Navigationshinweis.

Fig. 2a und Fig. 2b geben ein Anzeigebeispiel für den Fall, dass das Kraftfahrzeug sich in mittlerer Entfernung vom nächsten Abbiegemanöver befindet, hier 700 Meter. Entsprechend den oben angegebenen Entfernungsintervallen wird in diesem Fall ein Navigationshinweis der zweiten Hinweiskategorie ausgegeben.

Der im Head-Up Display (vgl. Fig. 2a) ausgegebene Navigationshinweis der zweiten Hinweiskategorie enthält Fahrspurinformationen. Diese sind ausgebildet als horizontaler Streifen am unteren Rand der Anzeigefläche des Head-Up Display. Dargestellt sind dabei die an der aktuellen Position des Kraftfahrzeugs in dessen aktueller Fahrtrichtung verfügbaren Fahrspuren. Die grafische Darstellung der Fahrspuren endet jedoch noch vor dem Aktionspunkt, d.h. der Aktionspunkt ist nicht im Bild dargestellt. Die grafische Darstellung der Fahrstreifen in der zweiten Hinweiskategorie ist grafisch angereichert durch ein erstes Fahrspuranzeigeobjekt F01, welches diejenige Fahrspur kennzeichnet, auf welcher eine erste von dem Navigationssystem vorgeschlagene Fahrlinie verläuft, sowie durch ein zweites Fahrspuranzeigeobjekt F02, welches diejenige Fahrspur kennzeichnet, auf welcher eine zweite von dem Navigationssystem als Alternative vorgeschlagene Fahrlinie verläuft. Die Fahrspuranzeigeobjekte F01 und F02 sind jeweils ausgebildet als in Fahrtrichtung weisende kurze Pfeile bzw. Dreiecke und besitzen unterschiedliche grafische Objektfüllungen.

Im Head-Up Display angezeigt werden ferner eine Entfernungsangabe EA1 (700 Meter), welche die verbleibende Entfernung zum Aktionspunkt angibt, sowie ein Richtungspfeil RP1, welcher die Abbiegerichtung für das bevorstehende Abbiegemanöver angibt und eine Angabe SN eines für das Abbiegemanöver relevanten Straßennamens zusammen mit einer Straßennummer.

Im Instrumentenkombi (vgl. Fig. 2b) wird zur gleichen Zeit kein Navigationshinweis ausgegeben.

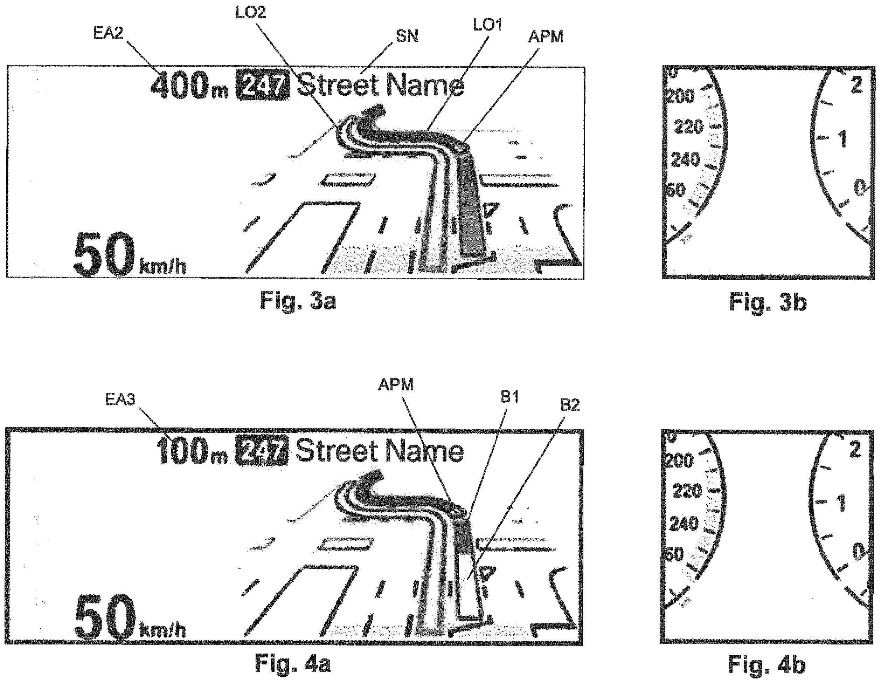

Fig. 3a und Fig. 3b geben ein Anzeigebeispiel für den Fall, dass das Kraftfahrzeug sich in kurzer Entfernung vom nächsten Abbiegemanöver befindet, hier 400 Meter. Entsprechend den oben angegebenen Entfernungsintervallen wird in diesem Fall ein Navigationshinweis der ersten Hinweiskategorie ausgegeben.

Der im Head-Up Display ausgegebene Navigationshinweis der ersten Hinweiskategorie ist dargestellt in Fig. 3a. Er enthält eine perspektivische spurgenaue Darstellung eines für das Abbiegemanöver relevanten Kartenausschnitts. Die (bereits oben genannte) erste von dem Navigationssystem vorgeschlagene Fahrlinie ist in den Kartenausschnitt spurgenau eingezeichnet in Gestalt eines ersten grafischen Linienobjekts L01. Die zweite von dem Navigationssystem vorgeschlagene Fahrlinie ist eingezeichnet in Gestalt eines zweiten grafischen Linienobjekts L02. LO1 und L02 besitzen unterschiedliche grafische Objektfüllungen. Die Objektfüllung von LO1 entspricht derjenigen von FO1 aus Fig. 2a, die Objektfüllung von L02 entspricht derjenigen von F02 aus Fig. 2a. Der Aktionspunkt ist in dem Kartenausschnitt durch eine entlang dem ersten Linienobjekt LO1 angeordnete Aktionspunktmarkierung APM grafisch markiert.

Der Übergang von einem Navigationshinweis der zweiten Hinweiskategorie gemäß Fig. 2a zu einem Navigationshinweis der ersten Hinweiskategorie gemäß Fig. 3a, welcher vorliegend durch ein Unterschreiten der Entfernungsschwelle von 400 Metern zum Aktionspunkt ausgelöst worden ist, ist gekennzeichnet durch die folgenden wesentlichen grafischen Veränderungen:
- Der in Fig. 2a am unteren Rand der Anzeigefläche des Head-Up Display angezeigte "Fahrspurinformationsstreifen" wurde im Wesentlichen beibehalten, jedoch erweitert zu dem in Fig. 3a dargestellten Kartenausschnitt, der nun auch den Aktionspunkt umfasst. Das Beibehalten des Fahrspurinformationsstreifens aus Fig. 2a setzte voraus, dass dieser bereits in Fig. 2a, d.h. im Rahmen des Navigationshinweises der zweiten Hinweiskategorie, die geeignete Größe und die geeignete Perspektive aufwies, um in Fig. 3a, d.h. in den Navigationshinweis der ersten Hinweiskategorie übernommen werden zu können.
- Das erste Fahrspuranzeigeobjekt F01 wurde durch das erste Linienobjekt LO1 ersetzt.
- Das zweite Fahrspuranzeigeobjekt F02 wurde durch das zweite Linienobjekt L02 ersetzt.

Im Head-Up Display angezeigt werden ferner eine numerische Entfernungsangabe EA2 (400 Meter), welche die verbleibende Entfernung zum Aktionspunkt angibt, sowie weiterhin die Angabe SN des für das Abbiegemanöver relevanten Straßennamens zusammen mit der Straßennummer. Ein Richtungspfeil entsprechend RP1 aus Fig. 2a wird nicht mehr angezeigt, da die Richtungsinformation nun im Kartenausschnitt eingezeichnet ist.

Im Instrumentenkombi (vgl. Fig. 3b) wird zur gleichen Zeit kein Navigationshinweis ausgegeben.

Fig. 4a und Fig. 4b geben ein Anzeigebeispiel für den Fall, dass das Kraftfahrzeug sich in nun noch kürzerer Entfernung vom nächsten Abbiegemanöver befindet, hier 100 Meter. Entsprechend den oben angegebenen Entfernungsintervallen wird in diesem Fall weiterhin ein Navigationshinweis der ersten Hinweiskategorie ausgegeben.

In weiten Teilen stimmt die Anzeige gemäß Fig. 4a daher mit derjenigen aus Fig. 3a überein. Der in Fig. 4a dargestellte Navigationshinweis der ersten Hinweiskategorie ist gegenüber der Momentaufnahme gemäß Fig. 3a jedoch folgendermaßen modifiziert: Der Abstand zum Aktionspunkt hat sich mittlerweile auf 100 Meter verkürzt. Dies wird angezeigt durch eine veränderte numerische Entfernungsangabe EA3 (100 Meter). Die aktuelle Entfernung des Kraftfahrzeugs vom Aktionspunkt wird zudem jedoch grafisch in dem Kartenausschnitt markiert, und zwar durch eine entlang dem ersten Linienobjekt LO1 angeordnete Entfernungsmarkierung. Die Entfernungsmarkierung ist im vorliegenden Beispiel umgesetzt als sich schritthaltend mit Positionsveränderungen des Kraftfahrzeugs verschiebende Grenze zwischen grafisch unterschiedlich gestalteten Bereichen des Linienobjekts LO1. Gemeint sind damit die beiden Bereiche bzw. Abschnitte des ersten Linienobjekt LO1, die in Fig. 4a mit B1 und B2 bezeichnet sind. Beide Bereiche liegen unterhalb der Aktionspunktmarkierung APM. B1 grenzt an die Aktionspunktmarkierung APM an. B2 grenzt an B1 an und erstreckt sich von dort bis zum unteren Ende des Linienobjekts L01. Die Grenze zwischen dem ersten Bereich B1 und dem zweiten Bereich B2 wird mit abnehmender Entfernung des Kraftfahrzeugs vom Aktionspunkt in Richtung der Aktionspunktmarkierung verschoben, d.h. B2 dehnt sich mit abnehmender Entfernung aus; B1 wird mit abnehmender Entfernung kleiner und verschwindet ggf. schließlich. Auf diese Weise wird eine Darstellungsform, die aus dem Stand der Technik bekannt ist als separater sich mit abnehmender Entfernung "auffressender" Entfernungsbalken, elegant abgewandelt und in die Gesamtdarstellung auf Basis der perspektivischen Straßenkarte übernommen.

Im Instrumentenkombi (vgl. Fig. 4b) wird zur gleichen Zeit kein Navigationshinweis ausgegeben.

Von Vorrichtungen und Verfahren des Stands der Technik unterscheidet sich das erfindungsgemäße Verfahren zumindest hinsichtlich der nachfolgend dargelegten Aspekte:
- Es wird eine vorteilhaft veränderte Informationspartitionierung zwischen Instrumentenkombi und Head-Up Display gewählt (Navigationshinweise teils im Instrumentenkombi, teils im Head-Up Display).
- Es wird eine vorteilhafte zeitlich sequentielle Darstellung gewählt, die zunächst alleine eine Spurempfehlung vorsieht (zweite Hinweiskategorie) und anschließend eine Navigationsdarstellung (erste Hinweiskategorie), die sich aus der Spurempfehlung entwickelt.
- Die erfindungsgemäße perspektivische Art der Darstellung schafft eine situative quasi-dreidimensionale Darstellung (gemeint ist eine an sich zweidimensionale, jedoch perspektivische Darstellung, die selbstverständlich dreidimensionale Objektformen berücksichtigen kann) von Spurempfehlung und Navigationsdarstellung im Head-Up Display.
- Die erfindungsgemäße perspektivische Art der Darstellung erlaubt zudem eine spurbezogene bzw- spurgenaue Integration der aktuellen Position des Kraftfahrzeugs.
Erreicht wird dadurch
- ein gegenüber dem Stand der Technik verbessertes Verständnis der Spurempfehlungsinformation, da diese konkreter als beim Stand der Technik dargestellt wird,
- eine situationsangemessene Darstellung von Spurempfehlung (vor dem entsprechenden Manöver) und Navigationsdarstellung ("bei" dem konkreten Abbiegemanöver)
- eine Aufmerksamkeitssteigerung für Spurempfehlung und Navigationsdarstellung,
- eine elegante Art und Weise zur Ausgabe der Zusatzinformation der aktuellen Fahrzeugspurposition im Verhältnis zur empfohlenen Spur,
- ein gegenüber dem Stand der Technik verbessertes Matching der Informationen mit der Außenwelt durch die gewählte quasi-dreidimensionale Darstellung.

## Patentansprüche

1. Verfahren zur Ausgabe von Navigationshinweisen in einem Kraftfahrzeug, welches über ein Navigationssystem und ein zur Ausgabe grafischer Navigationshinweise geeignetes Head-Up Display verfügt,
**dadurch gekennzeichnet,**
**dass** durch das Navigationssystem über das Head-Up Display grafische Navigationshinweise in zumindest drei sich hinsichtlich der grafischen Detaillierung des jeweiligen Navigationshinweises unterscheidenden Hinweiskategorien ausgegeben werden,
**dass** die Hinweiskategorie zur Ausgabe eines auszugebenden Navigationshinweises zumindest in Abhängigkeit von der Entfernung des Kraftfahrzeugs zu einem Aktionspunkt des durch den Navigationshinweis angekündigten Navigationsmanövers gewählt wird,
**dass** Navigationshinweise derjenigen Hinweiskategorie, die für kleine Entfernungen gewählt wird, eine perspektivische spurgenaue Darstellung eines für das Navigationsmanöver relevanten Kartenausschnitts im Head-Up Display umfassen, dass eine erste von dem Navigationssystem vorgeschlagene Fahrlinie durch ein erstes grafisches Linienobjekt (LO1) spurgenau in den Kartenausschnitt eingezeichnet wird, dass zudem eine zweite von dem Navigationssystem als Alternative vorgeschlagene Fahrlinie durch ein zweites grafisches Linienobjekt (L02), welches sich zumindest bezüglich seiner grafischen Objektfüllung von dem ersten Linienobjekt unterscheidet, spurgenau in den Kartenausschnitt eingezeichnet wird,
**dass** der Aktionspunkt durch eine entlang dem ersten Linienobjekt angeordnete Aktionspunktmarkierung (APM) grafisch in dem Kartenausschnitt markiert wird und dass die aktuelle Entfernung des Kraftfahrzeugs vom Aktionspunkt grafisch in dem Kartenausschnitt markiert wird durch eine entlang dem ersten Linienobjekt angeordnete Entfernungsmarkierung, die mit abnehmender Entfernung des Kraftfahrzeugs vom Aktionspunkt schritthaltend mit Positionsveränderungen des Kraftfahrzeugs entlang dem ersten Linienobjekt in Richtung der Aktionspunktmarkierung verschoben wird.

2. Verfahren nach Anspruch 1, **dadurch gekennzeichnet,**
**dass** Navigationshinweise einer zweiten Hinweiskategorie, die für mittlere Entfernungen gewählt wird, Fahrspurinformationen enthalten, die visualisiert werden durch eine im Wesentlichen als horizontaler Streifen am unteren Rand der Anzeigefläche des Head-Up Display angeordnete grafische Darstellung der an der aktuellen Position des Kraftfahrzeugs in dessen aktueller Fahrtrichtung verfügbaren Fahrspuren, und dass die grafische Darstellung der Fahrspuren in der zweiten Hinweiskategorie noch vor dem Aktionspunkt endet.

3. Verfahren nach Anspruch 2, **dadurch gekennzeichnet,**
**dass** die grafische Darstellung der Fahrspuren aus der zweiten Hinweiskategorie als Teil des Kartenausschnitts in die erste Hinweiskategorie, die für kleine Entfernungen gewählt wird, übernommen wird, wenn aufgrund einer Verkürzung der Entfernung des Kraftfahrzeugs zum Aktionspunkt von der zweiten Hinweiskategorie zur ersten Hinweiskategorie übergegangen wird.

4. Verfahren nach Anspruch 3, **dadurch gekennzeichnet,**
**dass** die grafische Darstellung der Fahrstreifen in der zweiten Hinweiskategorie grafisch angereichert ist durch ein erstes Fahrspuranzeigeobjekt, welches diejenige Fahrspur kennzeichnet, auf welcher die erste von dem Navigationssystem vorgeschlagene Fahrlinie verläuft,
**dass** die grafische Darstellung der Fahrstreifen in der zweiten Hinweiskategorie zudem grafisch angereichert ist durch ein zweites Fahrspuranzeigeobjekt, welches diejenige Fahrspur kennzeichnet, auf welcher die zweite von dem Navigationssystem vorgeschlagene Fahrlinie verläuft, und welches sich zumindest bezüglich seiner grafischen Objektfüllung von dem ersten Fahrspuranzeigeobjekt unterscheidet, dass das erste Fahrspuranzeigeobjekt durch das erste Linienobjekt ersetzt wird, wenn aufgrund einer Verkürzung der Entfernung des Kraftfahrzeugs zum Aktionspunkt von der zweiten Hinweiskategorie zur ersten Hinweiskategorie übergegangen wird, und dass das zweite Fahrspuranzeigeobjekt durch das zweite Linienobjekt ersetzt wird, wenn aufgrund einer Verkürzung der Entfernung des Kraftfahrzeugs zum Aktionspunkt von der zweiten Hinweiskategorie zur ersten Hinweiskategorie übergegangen wird.

5. Verfahren nach Anspruch 4, **dadurch gekennzeichnet,**
**dass** die grafische Objektfüllung des ersten Linienobjekts im Wesentlichen derjenigen des ersten Fahrspuranzeigeobjekts entspricht und
**dass** die grafische Objektfüllung des zweiten Linienobjekts im Wesentlichen derjenigen des zweiten Fahrspuranzeigeobjekts entspricht.

6. Verfahren nach einem der Ansprüche 2 bis 5, **dadurch gekennzeichnet,**
**dass** Navigationshinweise einer dritten Hinweiskategorie, die für große Entfernungen gewählt wird, keine Fahrspurinformationen enthalten.

7. Verfahren nach Anspruch 6, **dadurch gekennzeichnet,**
**dass** das Kraftfahrzeug über zumindest eine zweite Anzeigeeinheit zur Ausgabe grafischer Navigationshinweise verfügt und
**dass** die Navigationshinweise der dritten Hinweiskategorie ausschließlich durch die zweite Anzeigeeinheit ausgegeben werden.

8. Verfahren nach Anspruch 7, **dadurch gekennzeichnet,**
**dass** die Navigationshinweise der dritten Hinweiskategorie im Instrumentenkombi des Kraftfahrzeugs ausgegeben werden.

9. Verfahren nach einem der Ansprüche 1 bis 8, **dadurch gekennzeichnet,**
**dass** die Hinweiskategorie zur Ausgabe eines auszugebenden Navigationshinweises ferner in Abhängigkeit vom befahrenen Straßentyp gewählt wird.

10. Verfahren nach einem der Ansprüche 1 bis 9, **dadurch gekennzeichnet,**
**dass** Veränderungen der aktuellen Entfernung des Kraftfahrzeugs vom Aktionspunkt im Rahmen eines Navigationshinweises der ersten Hinweiskategorie dadurch angezeigt werden,
**dass** das erste Linienobjekt unterhalb der Aktionspunktmarkierung einen im Wesentlichen an die Aktionspunktmarkierung angrenzenden ersten Bereich mit einer ersten grafischen Objektfüllung und einen an den ersten Bereich angrenzenden, sich bis zum unteren Ende des Linienobjekts erstreckenden zweiten Bereich mit einer zweiten grafischen Objektfüllung besitzt und
**dass** die Grenze zwischen dem ersten Bereich und dem zweiten Bereich mit abnehmender Entfernung in Richtung der Aktionspunktmarkierung verschoben wird.

## Claims

1. A method for outputting navigation instructions in a motor vehicle which has a navigation system and a head-up display capable of outputting graphic navigation instructions, **characterised in that** graphic navigation instructions are output in at least three instruction categories, which differ in respect of the graphic detailing of the respective navigation instruction, by the navigation system via the head-up display,
**in that** the instruction category for outputting a navigation instruction to be output is selected at least subject to the distance of the motor vehicle to an action point of the navigation manoeuvre announced by the navigation instruction,
**in that** navigation instructions of the instruction category, which is selected for short distances, comprise a perspective lane-exact display of a map section relevant to the navigation manoeuvre in the head-up display,
**in that** a first driving line, proposed by the navigation system, is plotted on the map section in a lane-exact manner by a first graphic line object (L01),
**in that** furthermore a second driving line, proposed by the navigation system as an alternative, is plotted on the map section in a lane-exact manner by a second graphic line object (L02) which differs from the first line object at least in respect of its graphic object fill,
**in that** the action point is marked graphically in the map section by an action point marker (APM) arranged along the first line object, and
**in that** the current distance of the motor vehicle from the action point is marked graphically in the map section by a distance marker which is arranged along the first line object and is moved along the first line object in the direction of the action point marker in line with positive changes of the motor vehicle with a decreasing distance of the motor vehicle from the action point.

2. A method according to claim 1, **characterised in that** navigation instructions of a second instruction category, which is selected for medium distances, contain driving lane information which is visualised by a graphic display of the driving lanes which are available in the current position of the motor vehicle in the current driving direction thereof, which graphic display is arranged substantially as a horizontal strip on the lower edge of the display surface of the head-up display, and **in that** the graphic display of the driving lanes in the second instruction category ends in front of the action point.

3. A method according to claim 2, **characterised in that** the graphic display of the driving lanes is transferred from the second instruction category as part of the map section into the first instruction category which is selected for short distances when a transition is made from the second instruction category to the first instruction category due to a reduction in the distance of the motor vehicle to the action point.

4. A method according to claim 3, **characterised in that** the graphic display of the driving lanes in the second instruction category is graphically enhanced by a first driving lane indication object which characterises the driving lane on which the first driving line runs which is proposed by the navigation system,
**in that** the graphic display of the driving lanes in the second instruction category is also graphically enhanced by a second driving lane indication object which characterises the driving lane on which the second driving line runs which is proposed by the navigation system, and which differs from the first driving lane indication object at least in respect of its graphic object fill,
**in that** the first driving lane indication object is replaced by the first line object when a transition is made from the second instruction category to the first instruction category due to a reduction in the distance of the motor vehicle to the action point, and
**in that** the second driving lane indication object is replaced by the second line object when a transition is made from the second instruction category to the first instruction category due to a reduction in the distance of the motor vehicle to the action point.

5. A method according to claim 4, **characterised in that** the graphic object fill of the first line object substantially corresponds to that of the first driving lane indication object, and **in that** the graphic object fill of the second line object substantially corresponds to that of the second driving lane indication object.

6. A method according to any one of claims 2 to 5, **characterised in that** navigation instructions of a third instruction category, which is selected for long distances, do not contain any driving lane information.

7. A method according to claim 6, **characterised in that** the motor vehicle has at least a second display unit for outputting graphic navigation instructions, and
**in that** the navigation instructions of the third instruction category are output exclusively by the second display unit.

8. A method according to claim 7, **characterised in that** the navigation instructions of
the third instruction category are output in the instrument cluster of the motor vehicle.

9. A method according to any one of claims 1 to 8, **characterised in that** the instruction category for outputting a navigation instruction to be output is also selected subject to the type of road which is travelled.

10. A method according to any one of claims 1 to 9, **characterised in that** changes in the current distance of the motor vehicle from the action point within the scope of a navigation instruction of the first instruction category are displayed
**in that** below the action point marker, the first line object has a first region with a first graphic object fill, which first region substantially adjoins the action point marker, and has a second region with a second graphic object fill, which second region adjoins the first region and extends as far as the lower end of the line object, and
**in that** the boundary between the first region and the second region is moved in the direction of the action point marker as the distance decreases.

## Revendications

1. Procédé permettant de délivrer des indications de navigation dans un véhicule équipé d'un système de navigation et d'un affichage tête haute adapté pour délivrer des indications de navigation graphiques, **caractérisé en ce que**
le système de navigation délivre sur l'affichage tête haute, des indications de navigation dans au moins trois catégories d'indications se différenciant par le détail graphique de ces indications de navigation,
la catégorie d'indications pour délivrer une indication de navigation devant être délivrée est sélectionnée au moins en fonction de l'éloignement du véhicule d'un point d'action de la manoeuvre de navigation annoncée par l'indication de navigation,
des indications de navigation de la catégorie d'indications qui est sélectionnée pour de faibles éloignements renferment une représentation en perspective précise d'une section de carte importante pour la manoeuvre de navigation, dans l'affichage tête haute,
une première voie de déplacement proposée par le système de navigation est représentée avec précision dans la section de carte par un premier élément de voie graphique (LO1),
en outre, une seconde voie de déplacement proposée en tant qu'alternative par le système de navigation est représentée avec précision dans la section de carte par un second élément de voie graphique (L02) qui se distingue du premier élément de voie au moins par sa charge graphique,
le point d'action est repéré graphiquement dans la section de carte par un repère de point d'action (APM) situé le long du premier élément de voie, et
l'éloignement actuel du véhicule du point d'action est repéré graphiquement dans la section de carte par un repère d'éloignement situé le long du premier élément de voie lorsque l'éloignement du véhicule du point d'action diminue est déplacé en phase avec les variations de la position du véhicule le long du premier élément de voie en direction du repère du point d'action de voie.

2. Procédé conforme à la revendication 1,
**caractérisé en ce que**
des indications de navigation d'une seconde catégorie d'indications qui est sélectionnée pour des éloignements moyens renferment des informations de trajectoire qui sont visualisées par une représentation graphique essentiellement sous la forme de bandes horizontales située sur le bord inférieur de la surface d'affichage de l'affichage tête haute, des trajectoires disponibles dans la position actuelle du véhicule, dans sa direction de déplacement actuelle, et la représentation graphique des trajectoires dans la seconde catégorie d'indication se termine avant le point d'action.

3. Procédé conforme à la revendication 2,
**caractérisé en ce que**
la représentation graphique des trajectoires est transférée de la seconde catégorie d'indications, en tant que partie de la section de carte à la première catégorie d'indications qui est sélectionnée pour de faibles éloignements, lorsque, en raison d'une diminution de l'éloignement du véhicule du point d'action on passe de la seconde catégorie d'indications à la première catégorie d'indications.

4. Procédé conforme à la revendication 3,
**caractérisé en ce que**
la représentation graphique des bandes de déplacement dans la seconde catégorie d'indications est complétée graphiquement par un premier élément d'affichage de trajectoire qui caractérise la trajectoire sur laquelle s'étend la première voie de déplacement proposée par le système de navigation,
la représentation graphique des bandes de déplacement dans la seconde catégorie d'indications est en outre complétée graphiquement par un second élément d'affichage de trajectoire qui caractérise la trajectoire sur laquelle s'étend la seconde voie de déplacement proposée par le système de navigation et qui se distingue du premier élément d'affichage de trajectoire au moins par sa charge graphique,
le premier élément d'affichage de trajectoire est remplacé par le premier élément de voie lorsque, en raison d'une diminution de l'éloignement du véhicule du poids d'action, on passe de la seconde catégorie d'indications à la première catégorie d'indications, et
le second élément d'affichage de trajectoire est remplacé par le second élément de voie lorsque, en raison d'une diminution de l'éloignement du véhicule du point d'action on passe de la seconde catégorie d'indications à la première catégorie d'indications.

5. Procédé conforme à la revendication 4,
**caractérisé en ce que**
la charge graphique du premier élément de voie correspond essentiellement à celle du premier élément d'affichage de trajectoire, et
la charge graphique du second élément de voie correspond essentiellement à celle du second élément d'affichage de trajectoire.

6. Procédé conforme à l'une des revendications 2 à 5,
**caractérisé en ce que**
des indications de navigation d'une troisième catégorie d'indications qui est sélectionnée pour des éloignements importants ne renferment aucune information de trajectoire.

7. Procédé conforme à la revendication 6,
**caractérisé en ce que**
le véhicule dispose d'au moins une seconde unité d'affichage permettant de délivrer des indications de navigation graphiques, et
les indications de navigation de la troisième catégorie d'indications sont exclusivement délivrées par la seconde unité d'affichage.

8. Procédé conforme à la revendication 7,
**caractérisé en ce que**
les indications de navigation de la troisième catégorie d'indications sont délivrées sur le tableau de bord du véhicule.

9. Procédé conforme à l'une des revendications 1 à 8,
**caractérisé en ce que**
la catégorie d'indications permettant de délivrer une indication de navigation devant être délivrée est en outre sélectionnée en fonction du type de chaussée empruntée.

10. Procédé conforme à l'une des revendications 1 à 9,
**caractérisé en ce que**
des modifications de l'éloignement actuel du véhicule du point d'action sont affichées dans le cadre d'une indication de navigation de la première catégorie d'indications **en ce que**
le premier élément de voie a, au-dessous du repère du point d'action, une première zone essentiellement contigüe au repère du point d'action avec une première charge graphique et une seconde zone contigüe à la première zone et s'étendant jusqu'à l'extrémité inférieure de l'élément de voie avec une seconde charge graphique, et
la limite entre la première zone et la seconde zone est déplacée lorsque l'éloignement diminue en direction du repère du point d'action.
